(19)

Europäisches
Patentamt
European
Patent Office
Office européen
des brevets

(11) **EP 1 883 077 A1**

(12) **EUROPEAN PATENT APPLICATION**

(43) Date of publication:
   **30.01.2008 Bulletin 2008/05**

(51) Int Cl.:
   **G21C 5/00** *(2006.01)*   **G21C 17/00** *(2006.01)*

(21) Application number: **06117704.4**

(22) Date of filing: **24.07.2006**

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(71) Applicant: **Atomic Energy Council - Institute of Nuclear**
   **Energy Research**
   **Lungtan, Taoyuan,**
   **Taiwan (TW)**

(72) Inventors:
   • **Kuo, Weng-Sheng**
     **235, Jhonghe City, Taipei County (TW)**

   • **Liang, Jenq-Horng**
     **802, Kaohsiung City (TW)**
   • **Hu, Chung-Hsing**
     **324, Pingjhen City, Taoyuan County (TW)**
   • **Fang, Chi-Ho**
     **265, Luodong Township, Yilan County (TW)**
   • **Tung, Wu-Hsiung**
     **302, Jhubei City, Hsinchu County (TW)**

(74) Representative: **Beck, Michael Rudolf**
   **Beck & Rössig**
   **European Patent Attorneys**
   **Cuvilliésstrasse 14**
   **81679 München (DE)**

(54)   **Method for Analyzing a Fuel Displacement Accident of a Boiling Water Reactor**

(57)   Usually an analysis of fuel displacement accident is required before operating a reactor. In the present invention, fuel displacement accident is analyzed by linearly combining calculation results of single displacement layouts and a calculation result of a default placement layout. In this way, a number of displacement combinations to be analyzed can be reduced. And, thus, time for the analysis is saved and safety of the reactor core can be affirmed.

FIG.1

## Description

### Field of the invention

The present invention relates to analyzing a fuel displacement accident; more particularly, relates to linearly combining calculation results of single displacement layouts with a calculation result of a default placement layout to accomplish an analysis.

### Description of the Related Arts

Nuclear fuels used in a nuclear power plant must be replaced after a cycle of operation to remain operation for the next cycle. Because there are hundreds of fuel bundles in the core, a lot of moving out and moving in must be done when replacing the fuels. Fuel displacement accident rarely happens, but it may cause a big trouble once it happens. With regard to nuclear safety, every fuel placement layout has to be processed with a safety analysis of fuel displacement accident before an operation of a reactor to affirm safety of the core. Hence, to keep a boiling water reactor from danger of fuel displacement accident, a safety analysis of fuel displacement accident is processed before an operation by finding out displacement combinations to be analyzed.

In the early days, fuel displacement accident is analyzed based on the experiences of engineers. They work on the analysis through a "trial-and-error" to find out the most serious fuel displacement. The method of "trial-and-error" requires a lot of human resources and does not guarantee that the most serious fuel displacement can be found. Therefore, other analysis methods are developed, which include a simple filtering method, a parameter analysis method and Fawk's searching method (US patent No.5,790,618).

The simple filtering method applies a two dimensional core calculation or the Haling principle to analyze all fuel displacement possibilities. Then more serious displacements are filtered to be processed with a three dimensional analysis to find out the most serious fuel displacement.

The parameter analysis method defines physical parameters related to seriousness of fuel displacement at first. Then the values of the physical parameters of all fuel bundles are sorted to determine the most serious fuel displacement.

Fawk's searching method have had its patent right since 1998. The method defines a range for searching by a pair of swap variables to find out the most serious fuel displacement. Fawk's searching method has two phases: an initialization phase and a search phase. In the initialization phase, each fuel bundle has a swap variable according to its contribution to the full core power; that is, there is a swap variable for each fuel bundle. In the search phase, two swap variables are randomly selected and the two corresponding fuel bundles are interchanged to form a fuel displacement layout. Then a core analysis tool is used to analyze the fuel displacement layout for finding its effect. Thus next pair of swap variables is changed accordingly. Yet the changing rules are different among reactors; different reactors have different changing rules, not to mention the experiences of engineers will play major roles in forming the rules.

The first two methods are in lack of accuracy. If a serious fuel displacement is to be found by using the above two methods, a great amount of three dimensional calculations has to be performed and so a lot of time is spent. Concerning the Fawk's method, a common rule is in lack over changing the swap variables among different reactors; in addition, the changing rule relies too much on the experiences of engineers. Basically, the Fawk's method is a search method and does not guarantee that the most serious fuel displacement can be found. To increase the chance of finding out the most serious fuel displacement, the number of pairs of swap variables must be increased and the time for the three dimensional calculations must be extended.

The above methods have the chance to find out the most serious fuel displacement yet with a long-time of processing. Taking a nuclear power plant of a boiling water reactor as an example, if a maximum of difference of minimum critical power ratio (MaxDCPR) at all cycle burnup points for all fuel displacements is to be obtained, the total amount of analysis cases must be incredibly large and the execution time must be awfully long. Hence, the prior arts do not fulfill users' requests on actual use.

### Summary of the invention

The main purpose of the present invention is to analyze a fuel displacement accident with a reduced number of displacement combinations; and thus time for analyzing a fuel displacement accident before operating a reactor is shortened and safety of the reactor core is affirmed.

To achieve the above purpose, the present invention provides a method for analyzing a fuel displacement accident of a boiling water reactor, wherein a Fortran program is used to obtain calculation data for a plurality of single displacement layouts; by using a reactor-core neutronic analysis tool, such as SIMULATE-3, each single displacement layout is processed with a full-core three-dimensional burnup calculation; through another Fortran program, a plurality of displacement combinations is obtained; two separate critical power ratio (CPR) matrixes of two single displacement layouts corresponding to each displacement combination are obtained; the two CPR matrixes and a CPR matrix of a default placement layout are linearly combined to obtain a CPR matrix of each displacement combination; a minimum CPR (MCPR) at each cycle burnup point is obtained from the CPR matrixes of the displacement combination and the MCPR is subtracted from an MCPR of the default placement layout to obtain a difference of MCPR (DCPR); a maximum DCPR (MaxDCPR) of each displacement combination is obtained from the DCPRs at the cycle burnup points; the displacement combinations are sorted according to their MaxDCPRs; and the first 10 displacement combinations are processed with the full-core three-dimensional burnup calculations again to obtain a largest MaxDCPR as a final analysis result for the fuel displacement accident. Accordingly, a novel method for analyzing a fuel displacement accident of a boiling water reactor is provided.

**Brief descriptions of the drawings**

The present invention will be better understood from the following detailed descriptions of the preferred embodiments according to the present invention, taken in conjunction with the accompanying drawings, in which

FIG.1      is a view showing the flow chart of the present invention;
FIG.1A     is a view showing the flow chart of step (a);
FIG.1B     is a view showing the flow chart of step (c);
FIG.1C     is a view showing the flow chart of step (d);
FIG.1D     is a view showing the initial core layout of the first preferred embodiment;
FIG.1E     is a view showing the core layout of the second preferred embodiment with reloaded fuel;
FIG.2A     is a view showing the default fuel placement layout;
FIG.2B     is a view showing the fuel placement layout of the first displacement combination;
FIG.2C     is a view showing the first single displacement layout;
FIG.2D     is a view showing the second single displacement layout;
FIG.2E     is a view showing the third single displacement layout;
FIG.2F     is a view showing the fuel placement layout of the second displacement combination;
FIG.2G     is a view showing the fourth single displacement layout;
FIG.2H     is a view showing the fuel placement layout of the third displacement combination;
FIG.2I     is a view showing the fifth single displacement layout; and
FIG.2J     is a view showing the fuel placement layout of the fourth displacement combination.

**Description of the preferred embodiments**

The following descriptions of the preferred embodiments are provided to understand the features and the structures of the present invention.

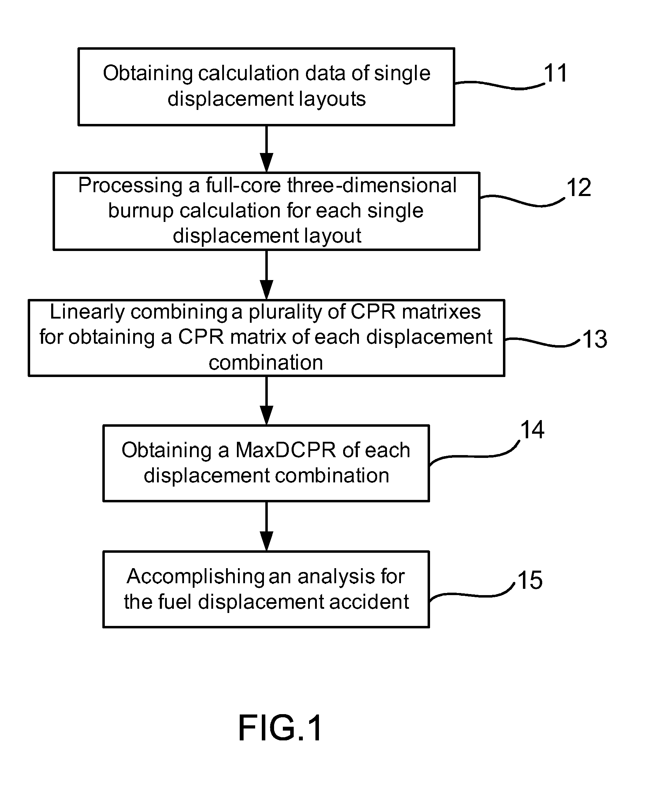

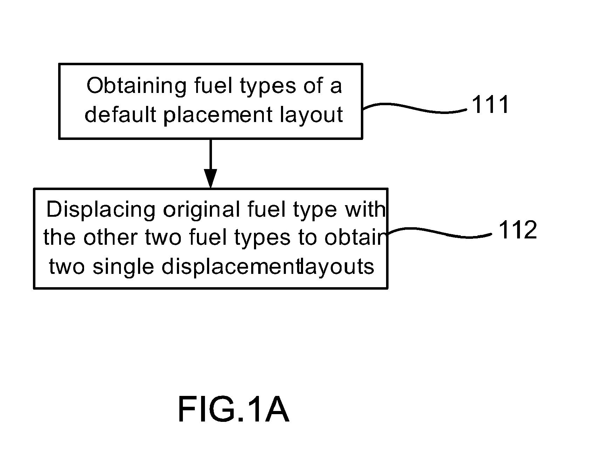

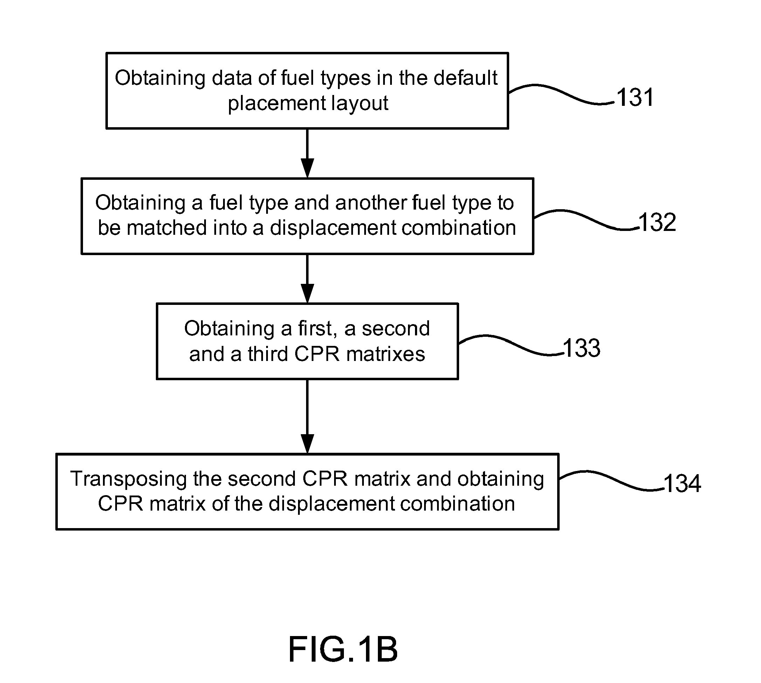

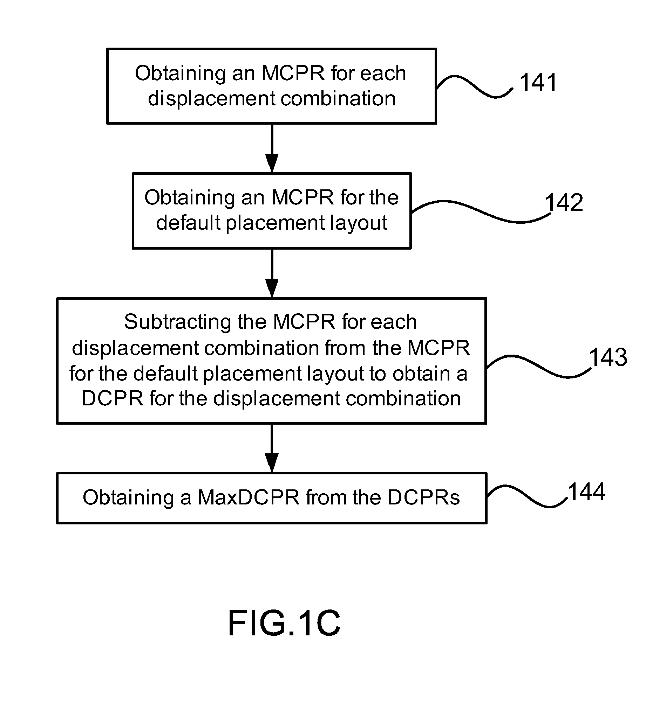

Please refer to FIG.1, which is a view showing a flow chart of the present invention. As shown in the figure, the present invention provides a method for analyzing a fuel displacement accident of a boiling water reactor. In the method according to the present invention, an analysis of only a quarter-core-symmetric reactor core is processed. The method comprises the following steps:

(a) Obtaining calculation data of single displacement layouts 11: A computer program is used to obtain calculation data for a plurality of single displacement layouts, wherein the computer program is written in Fortran language and an amount of the single displacement layouts is obtained by multiplying a number of fuel bundles of a quarter-core-symmetric reactor core by a number of fuel types subtracted by one.

(b) Performing a full-core three-dimensional burnup calculation for each single displacement layout 12: By using a reactor-core neutronic analysis tool, each single displacement layout is processed with a full-core three-dimensional burnup calculation; and the reactor-core neutronic analysis tool is SIMULATE-3.

(c) Combining a plurality of CPR matrixes for obtaining a CPR matrix of each displacement combination 13: Through another Fortran program, a plurality of displacement combinations is obtained. Then two critical power ratio (CPR) matrixes of two single displacement layouts corresponding to each displacement combination are obtained. The two CPR matrixes of the two single displacement layouts and a CPR matrix of a default placement layout are linearly combined to obtain a CPR matrix of each displacement combination.

(d) Obtaining a MaxDCPR of each displacement combination 14: A maximum of difference of minimum CPR (MaxDCPR) is obtained for each displacement combination.

(e) Accomplishing an analysis for the fuel displacement accident 15: The displacement combinations are sorted for final analysis of the fuel displacement accident, in order to obtain the final analysis result of fuel displacement accident.

Thus, a novel method for analyzing a fuel displacement accident of a boiling water reactor is provided.

**Preferred Embodiment 1:**

**Applying the present invention to an initial core**

Please refer to FIG.1 and FIG.1A to FIG.1D, which are a view showing the flow chart of the present invention; views showing the flow chart of step (a), step (c) and step (d); and a view showing the initial core layout of the first preferred embodiment. As shown in the figures, the first preferred embodiment analyzes a quarter-core-symmetric initial core 16, wherein the initial core 16 has 624 fuel bundles and has a first fuel type 161, a second fuel type 162 and a third fuel type 163. The present invention focuses on analyzing a quarter quadrant of a reactor core 164, comprising the following steps:

(a) A Fortran program is used to obtain calculation data for 312 single displacement layouts, comprising the following steps:

(a1) Obtaining fuel types of a default placement layout 111.

(a2) Displacing an original fuel type with the other two fuel types to obtain two single displacement layouts 112: In a quarter quadrant of the reactor core 164, the original fuel type is replaced with the other two fuel types separately to obtain two single displacement layouts, according to an order of fuel bundle positions in the reactor core. Hence, 312 single displacement layouts are obtained.
In step (a2), a number of the single displacement layouts in the quarter quadrant of the reactor core 164 is obtained by multiplying the number of the fuel bundles by the number of fuel types subtracted by 1, wherein the number of the single displacement layouts in the first preferred embodiment is obtained by $624/4\times(3-1)=312$.

(b) By using a reactor-core neutronic analysis tool, such as SIMULATE-3, a full-core three-dimensional burnup calculation is performed for each of the 312 single displacement layouts.

(c) By using another Fortran program, a plurality of displacement combinations is obtained. Then two CPR matrixes of two single displacement layouts corresponding to each displacement combination are obtained from the results of full-core three-dimensional burnup calculations over the 312 single displacement layouts. And the two CPR matrixes of the two single displacement layouts and the CPR matrix of the default placement layout are linearly combined to obtain a CPR matrix of each displacement combination. Step (c) comprises the following steps:

(c1) Obtaining data of fuel types in the default placement layout 131.

(c2) Obtaining a fuel type and another fuel type to be matched into a displacement combination 132: In the quarter quadrant of the reactor core 164, a fuel type is sequentially obtained according to an order of fuel bundle positions in the reactor core; and, in the full reactor core, another fuel type is obtained following an order of fuel bundle positions in the reactor core to be matched into a displacement combination.

(c3) Obtaining a first, a second and a third CPR matrixes 133: Calculated data of the two single displacement layouts corresponding to the displacement combination are obtained to constitute a first CPR matrix and a second CPR matrix; and calculated data for the default placement layout is obtained to constitute a third CPR matrix.

(c4) Transposing the second CPR matrix and constituting a CPR matrix of the displacement combination 134: By referring to the location of misplaced fuel bundle in the reactor core, the second CPR matrix is transposed into a fourth CPR matrix, a fifth CPR matrix and a sixth CPR matrix which are added with the first CPR matrix respectively, and then followed by subtracting the third CPR matrix, thereby obtaining at least one CPR matrix of the displacement combination.

(d) A MaxDCPR is obtained for each displacement combination. Step (d) comprises the following steps:

(d1) Obtaining an MCPR for each displacement combination 141: A minimum CPR (MCPR) at each cycle burnup point is obtained from the at least one CPR matrix of the displacement combination in step (c), wherein there are 27332 displacement combinations in the preferred embodiment and hence 27332 CPR matrixes are obtained; and there are 45 burnup points.

(d2) Obtaining an MCPR for the default placement layout 142: An MCPR at each cycle burnup point is obtained from the CPR matrixes of the default placement layout.

(d3) Subtracting the MCPR for each displacement combination from the MCPR for the default placement layout to obtain a DCPR for the displacement combination 143: The MCPR obtained in step (d1) is subtracted from the MCPR obtained in step (d2) to obtain a difference of MCPR (DCPR) at each cycle burnup point for each displacement combination.

(d4) Obtaining a MaxDCPR from the DCPRs 144: In the DCPRs obtained from step (d3), a MaxDCPR at each cycle burnup point is obtained for each displacement combination.

(e) The displacement combinations are sorted according to their MaxDCPRs, and the first 10 or 100 displacement combinations are processed with the full-core three-dimensional burnup calculations again to obtain a largest MaxDCPR as a final analysis result for the fuel displacement accident.

As a result, the possible displacement layouts found through the above steps are analyzed with a shortened analysis time for the fuel displacement accident before the reactor is operated.

**Preferred Embodiment 2:**

**Applying the present invention to a core with replaced fuel**

Please refer to FIG.IE, which is a view showing the core layout of the second preferred embodiment with reloaded fuels. As shown in the figures, the second preferred embodiment analyzes a quarte-core-symmetric reactor core 17 with reloaded fuels, wherein the core 17 with reloaded fuels has 624 fuel bundles and has a first fuel type 171, a second fuel type 172 and a fourth fuel type 173. Because the first fuel type 171 and the second fuel type 172 are once-burn fuel types, the first fuel type 171 and the second fuel type 172 will have burnup distributions. Because even the fuel bundles of a same fuel type can have different burnup values, even two fuel bundles of the same fuel type can have a displacement combination, which does not happen in the initial core. The second preferred embodiment has three fuel types originally. Yet, the first fuel type has a burnup distribution between 7.257~13.195 GWD/MT (gigawatt-days per metric ton), which is a range too scattered. Hence, the first fuel type is further divided into two fuel types: one has a burnup distribution greater then 10 GWD/MT; and the other has a burnup distribution less then 10 GWD/MT. And the second fuel type has a burnup distribution between 10.831~11.387 GWD/MT, which is a range not too scattered; and so the second fuel type is not further divided. As a result, the second preferred embodiment has four fuel types. And the present invention focuses on analyzing a quarter quadrant of a reactor core 174, comprising the following steps:

(a) A Fortran program is used to obtain calculation data for 468 single displacement layouts, comprising the following steps:

(a1) Fuel types of a default placement layout are obtained.

(a2) In a quarter quadrant of the reactor core 174, the original fuel type is replaced with the other three fuel types separately to obtain three single displacement layouts according to an order of fuel bundle positions in the reactor core. Hence, 468 single displacement layouts are obtained.
In step (a2), a number of the single displacement layouts in the quarter quadrant of the reactor core 174 is obtained by multiplying the number of the fuel bundles by the number of fuel types subtracted by 1, wherein the number of single displacement layouts in the second preferred embodiment is obtained by 624/4x(4-1)=468.

(b) By using a reactor-core neutronic analysis tool, such as SIMULATE-3, a full-core three-dimensional burnup calculation is performed for each of the 468 single displacement layouts 12.

(c) By using another Fortran program, a plurality of displacement combinations is obtained. Then two CPR matrixes of two single displacement layouts corresponding to each displacement combination are obtained from the results of full-core three-dimensional burnup calculations for the 468 single displacement layouts. The two CPR matrixes of the two single displacement layouts are linearly combined with the CPR matrix of the default placement layout to obtain a CPR matrix of each displacement combination 13. Step (c) comprises the following steps:

(c1) Data of fuel types in the default placement layout are obtained.

(c2) In the quarter quadrant of the reactor core 174, a fuel type is sequentially obtained according to an order of fuel bundle positions in the reactor core; and, in the full reactor core, another fuel type is obtained following an order of fuel bundle positions in the reactor core to be matched into a displacement combination.

(c3) Calculated data of two single displacement layouts corresponding to the displacement combination are obtained to constitute a first CPR matrix and a second CPR matrix; and calculated data for the default placement layout is obtained to constitute a third CPR matrix.

(c4) By referring to the location of displaced fuel bundle in the reactor core, the second CPR matrix is transposed into a fourth CPR matrix, a fifth CPR matrix and a sixth CPR matrix which are added with the first CPR matrix respectively, and then followed by subtracting the third CPR matrix, thereby obtaining at least one CPR matrix of the displacement combination.

(d) A MaxDCPR is obtained for each displacement combination. Step (d) comprises the following steps:

(d1) An MCPR at each cycle burnup point is obtained from the at least one CPR matrix of the displacement combination in step (c), wherein there are 32116 displacement combinations in the second preferred embodiment and hence 32116 CPR matrixes are obtained; and there are 35 burnup points.

(d2) An MCPR at each cycle burnup point is obtained from the CPR matrixes of the default placement layout.

(d3) The MCPR obtained in step (d1) is subtracted from the MCPR obtained in step (d2) to obtain a DCPR at each cycle burnup point for each displacement combination.

(d4) In the DCPRs obtained from step (d3), a MaxDCPR at each cycle burnup point is obtained for each displacement combination.

(e) The displacement combinations obtained are sorted according to their MaxDCPRs, and the first 10 or 100 displacement combinations are processed with the full-core three-dimensional burnup calculations again to obtain a largest MaxDCPR as a final analysis result for the fuel displacement accident 15.

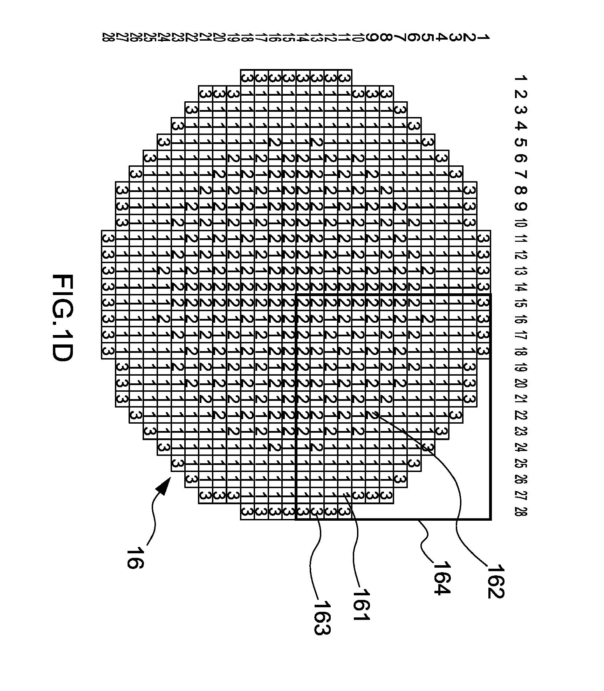

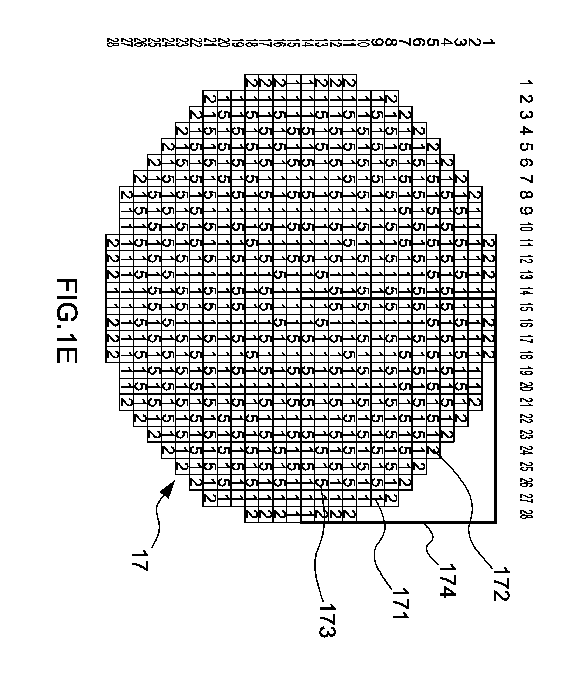

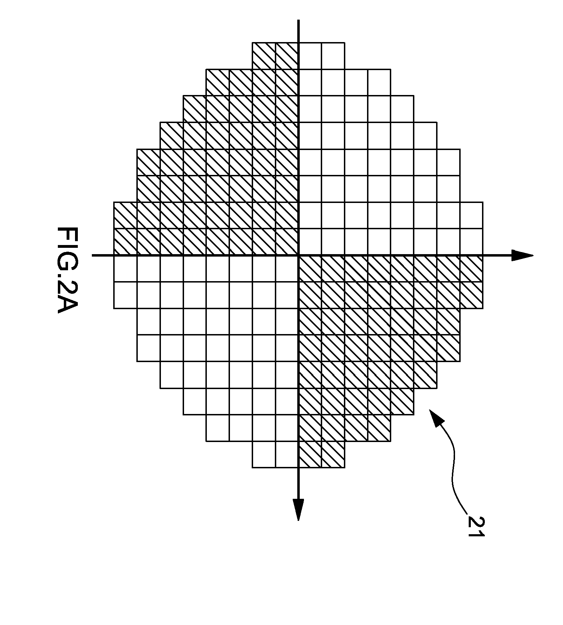

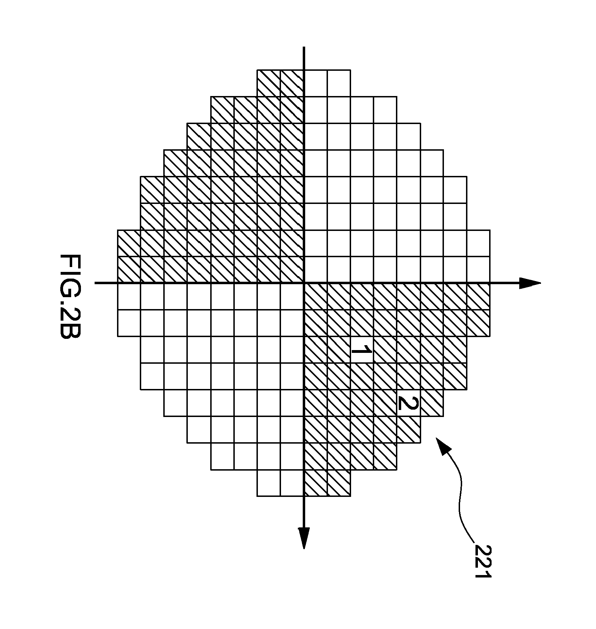

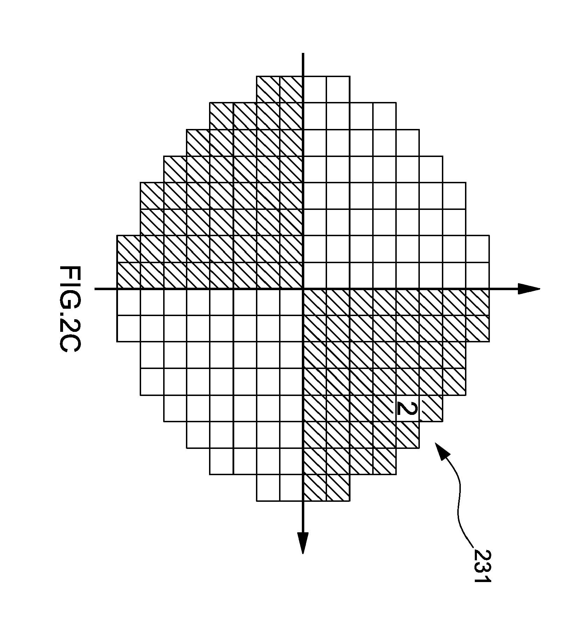

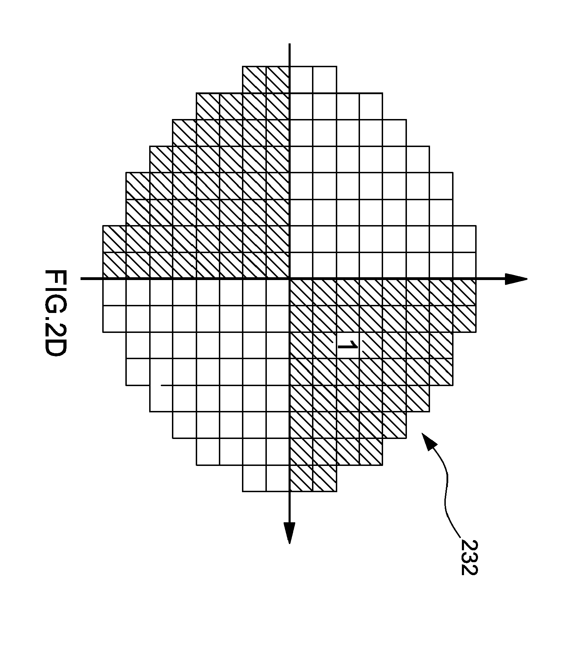

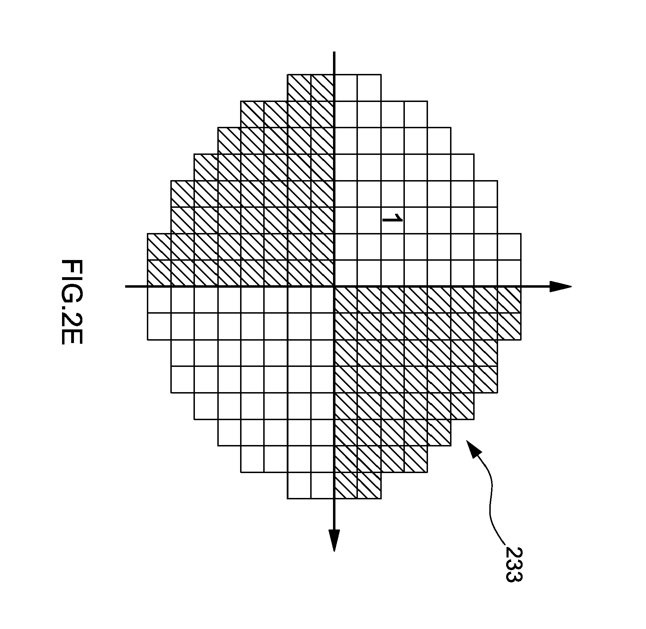

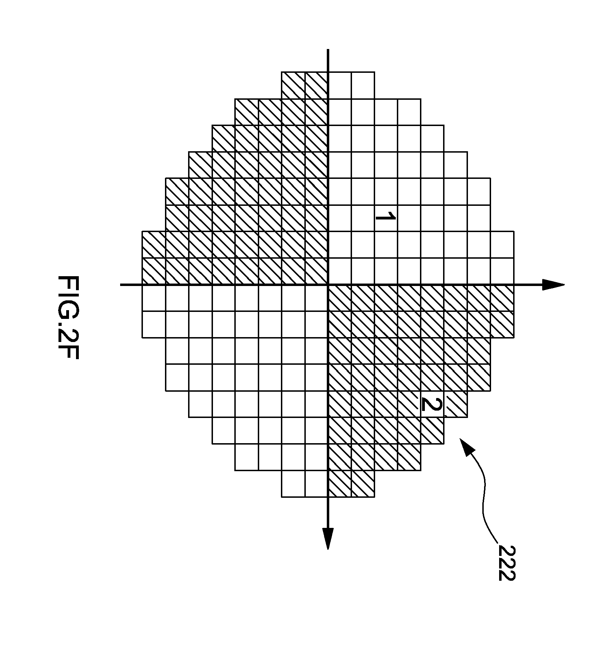

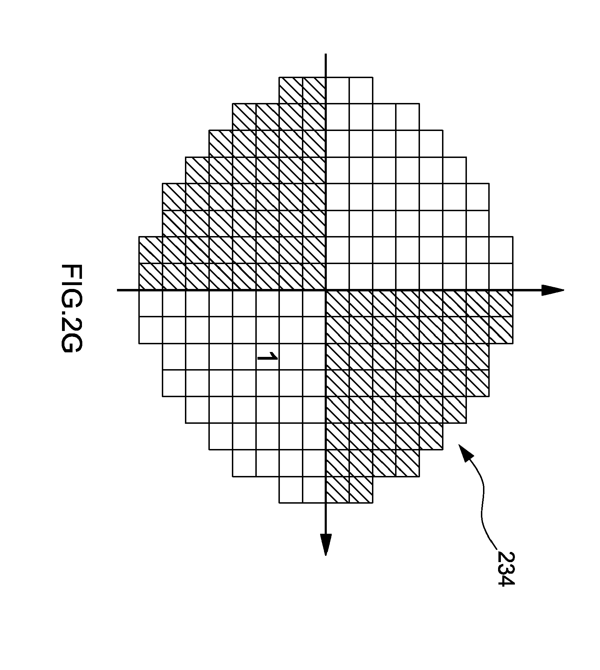

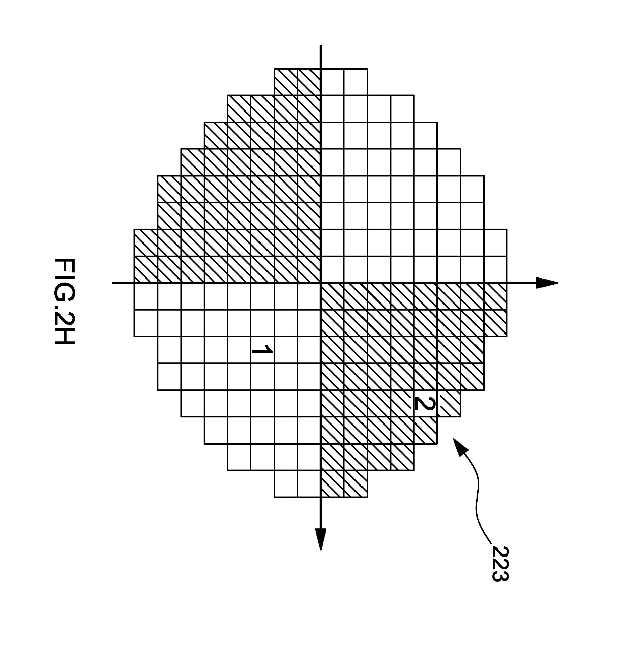

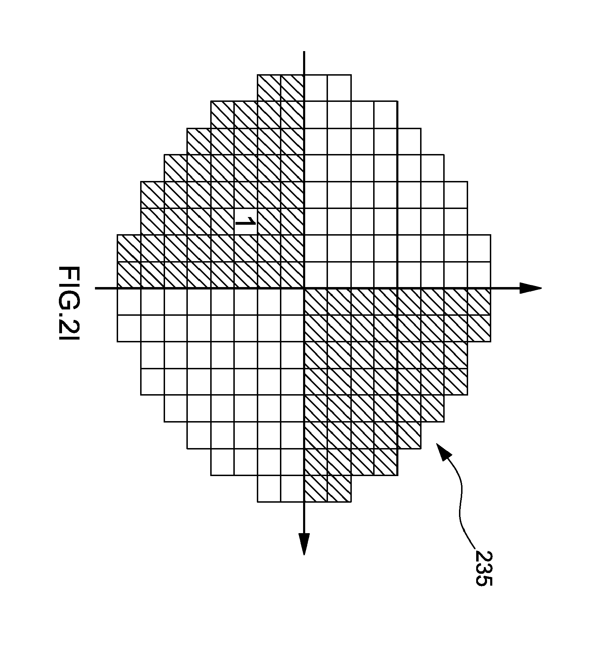

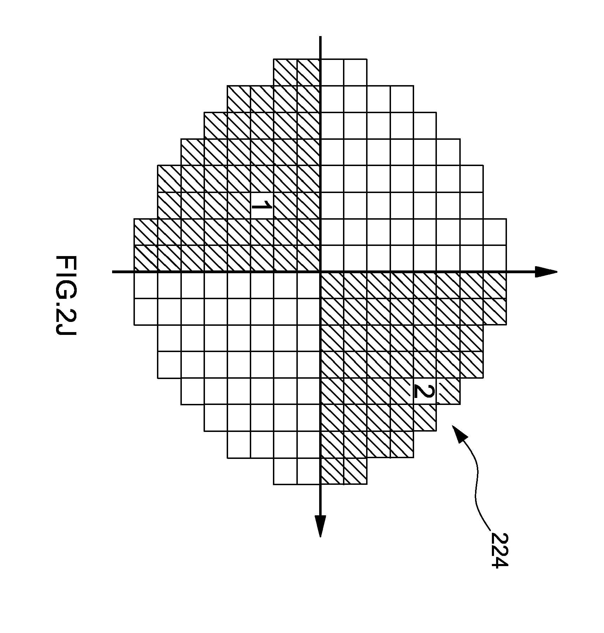

As a result, the possible displacement layouts found through the above steps are analyzed with a shortened analysis time for the fuel displacement accident before the reactor is operated.
Please refer to FIG.2A to FIG.2J, which are a view showing a default fuel placement layout; a view showing a fuel placement layout of a first displacement combination; views showing a first, a second and a third single displacement layouts; a view showing the fuel placement layout of a second displacement combination; a view showing a fourth single displacement layout; a view showing the fuel placement layout of a third displacement combination; a view showing a fifth single displacement layout; and a view showing the fuel placement layout of a fourth displacement combination.
FIG.2A shows the default fuel placement layout 21 of a quarter-core-symmetric reactor core, and a CPR matrix of which is a third CPR matrix (fol) as follows:

$$fol = \begin{bmatrix} & & 0.000 & 0.000 & & \\ 0.000 & 0.000 & 0.000 & 0.000 \\ 0.000 & 0.000 & 0.000 & 0.000 \\ & & 0.000 & 0.000 & & \end{bmatrix}$$

FIG.2B shows a fuel placement layout of a first displacement combination 221. And FIG.2C shows a first single displacement layout 231 corresponding to the first displacement combination 221, whereas a CPR matrix of which is a first CPR matrix (P) as follows:

$$P = \begin{bmatrix} & 0.001 & 0.001 & \\ 0.001 & 0.001 & 0.001 & 0.001 \\ 0.001 & 0.001 & 0.001 & 0.001 \\ & 0.001 & 0.001 & \end{bmatrix}$$

FIG.2D shows a second single displacement layout 232 corresponding to the first displacement layout 221, and a CPR matrix of which is a second CPR matrix as follows:

$$Q = \begin{bmatrix} & 0.001 & 0.002 & \\ 0.005 & 0.003 & 0.004 & 0.006 \\ 0.007 & 0.009 & 0.010 & 0.009 \\ & 0.011 & 0.012 & \end{bmatrix}$$

The first CPR matrix (P) and the second CPR matrix (Q) are added, followed by subtracting the third CPR matrix (fol) to constitute a CPR matrix of the first displacement combination as follows:

$$X_{emu} = P + Q - fol = \begin{bmatrix} & 0.002 & 0.003 & \\ 0.006 & 0.004 & 0.005 & 0.007 \\ 0.008 & 0.010 & 0.011 & 0.009 \\ & 0.012 & 0.013 & \end{bmatrix}$$

When the second CPR matrix is mirrored on a Y-axis, a fourth CPR matrix of a third single displacement layout 233 shown in FIG.2E is constituted. Then the first CPR matrix and the fourth CPR matrix are added, followed by subtracting the third CPR matrix to constitute a CPR matrix for a second displacement combination 222 shown in FIG.2F as follows:

$$X_{emu} = \begin{bmatrix} & 0.003 & 0.002 & \\ 0.007 & 0.005 & 0.004 & 0.006 \\ 0.009 & 0.011 & 0.010 & 0.008 \\ & 0.013 & 0.012 & \end{bmatrix}$$

When the second CPR matrix is mirrored on an X-axis, a fifth CPR matrix of a fourth single displacement layout 234 shown in FIG.2G is constituted. Then the first CPR matrix and the fifth CPR matrix are added, followed by subtracting the third CPR matrix to constitute a CPR matrix for a third displacement combination 223 shown in FIG.2H as follows:

$$X_{emu} = \begin{bmatrix} & 0.012 & 0.013 & \\ 0.008 & 0.010 & 0.011 & 0.009 \\ 0.006 & 0.004 & 0.005 & 0.007 \\ & 0.002 & 0.003 & \end{bmatrix}$$

When the second CPR matrix is mirrored on a Y-axis and an X-axis, a sixth CPR matrix of a fourth single displacement layout 235 shown in FIG.2I is constituted. Then the first CPR matrix and the sixth CPR matrix are added, followed by subtracting the third CPR matrix to constitute a CPR matrix for a fourth displacement combination 224 shown in FIG.2J as follows:

$$X_{emu} = \begin{bmatrix} & 0.013 & 0.012 & \\ 0.009 & 0.011 & 0.010 & 0.008 \\ 0.007 & 0.005 & 0.004 & 0.006 \\ & 0.003 & 0.002 & \end{bmatrix}$$

Through the above steps, when analyzing the initial core, CPR matrixes of 312 single displacement layouts are linearly combined with the CPR matrix of the default placement layout to constitute CPR matrixes of 27332 displacement combinations; and, when analyzing the core with reloaded fuels, CPR matrixes of 468 single displacement layouts are linearly combined with the CPR matrix of the default placement layout to constitute CPR matrixes of 32116 displacement combinations.

To sum up, the present invention provides a method for analyzing a fuel displacement accident of a boiling water reactor, wherein a number of displacement combinations to be analyzed is reduced and thus time for analyzing a fuel displacement accident before operating a reactor is shortened, so that safety of a reactor core is affirmed.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A method for analyzing a fuel displacement accident of a boiling water reactor, said analysis method processing a quarter-core-symmetric reactor core, and comprising steps of:

   (a) obtaining calculation data for a plurality of single displacement layouts;
   (b) performing a full-core three-dimensional burnup calculation for each of said single displacement layouts by using a reactor-core neutronic analysis tool;
   (c) obtaining a plurality of displacement combinations, obtaining two critical power ratio (CPR) matrixes of two single displacement layouts corresponding to each of said displacement combinations, and linearly combining said two CPR matrixes of said two single displacement layouts and a CPR matrix of a default placement layout to constitute a CPR matrix of said each displacement combination;
   (d) finding a maximum of difference of minimum CPR (MaxDCPR) by using said CPR matrixes of each displacement combinations; and
   (e) sorting said displacement combinations according to said MaxDCPRs of said displacement combinations, obtaining first 10 displacement combinations after said sorting to be performed with said full-core three-dimensional burnup calculations again, and finding a maximum MaxDCPR in said 10 displacement combinations after said full-core three-dimensional burnup calculations.

2. The method according to claim 1, wherein a number of said single displacement layouts in step (a) is obtained by multiplying a number of fuel bundles by a number of fuel types subtracted by one.

3. The method according to claim 1 or 2, wherein said calculation data of said plurality of single displacement layouts are obtained in step (a), comprising steps of:

(a1) obtaining data of fuel types of said default placement layout; and
(a2) in a quarter quadrant of a reactor core, displacing each original fuel type with the other fuel types according to an order of fuel bundle positions in said reactor core to obtain said calculation data of said plurality of single displacement layouts.

4. The method according to one of claims 1 to 3 , wherein said at least one CPR matrix of said displacement combination in step (c) is obtained through steps of:

(c1) obtaining data of fuel types of said default placement layout;
(c2) in a quarter quadrant of a reactor core, sequentially obtaining a fuel type according to an order of fuel bundle positions in said reactor core and obtaining another fuel type following an order of fuel bundle positions in said reactor core and matching said fuel type and said another fuel type into a displacement combination;
(c3) obtaining calculated data of said full-core three-dimensional burnup calculations for two single displacement layouts of said displacement combination to obtain a first CPR matrix and a second CPR matrix, and obtaining calculated data for said default placement layout to obtain a third CPR matrix; and
(c4) transposing said second CPR matrix into a fourth CPR matrix, a fifth CPR matrix and a sixth CPR matrix, and adding said fourth CPR matrix, said fifth CPR matrix, said sixth CPR matrix with said first CPR matrix to constitute said CPR matrix of said displacement combination.

5. The method according to one of claims 1 to 4, wherein step (d) comprises steps of:

(d1) obtaining a minimum CPR (MCPR) at each cycle burnup point from said at least one CPR matrix of said displacement combination in step (c);
(d2) obtaining a minimum CPR (MCPR) at each cycle burnup point from said CPR matrix of said default placement layout;
(d3) in said CPR matrixes of said displacement combinations, subtracting said corresponding MCPR at each cycle burnup point from said MCPR for said default placement layout to obtain difference of MCPR (DCPR) at said cycle burnup point; and
(d4) obtaining said MaxDCPR from said DCPRs of said displacement combinations.

6. The method according to to one of claims 1 to 5, wherein said reactor-core neutronic analysis tool is SIMULATE-3.

7. The method according to claim 6, wherein said reactor-core neutronic analysis tool is any other kind of reactor-core neutronic analysis program.

8. The method according to one of claims 1 to 7, wherein said plurality of single displacement layouts in step (a) and said plurality of displacement combinations in step (c) are obtained through computer programs.

9. The method according to claim 8, wherein said computer programs are written in Fortran language.

10. The method according to claim 9, wherein said computer programs are written in any other kind of computer programming language.

11. The method according to one of claims 1 to 10, wherein said boiling water reactor is selected from a group consisting of a general boiling water reactor and an advanced boiling water reactor.

12. The method according to one of claims 1 to 11, wherein said analysis method and steps are applied to half-core-symmetric or octant-core-symmetric reactor cores.

13. The method according to one of claims 1 to 12, wherein said steps for obtaining calculated data of single fuel displacement layouts are applied to half-core-symmetric or octant-core-symmetric reactor cores.

14. The method according to one of claims 1 to 13, wherein first 100 displacement combinations are obtained in step (e) to be processed with said full-core three-dimensional burnup calculations again.

FIG.1

FIG.1A

Obtaining fuel types of a
default placement layout

— 111

Displacing original fuel type with
the other two fuel types to obtain
two single displacement layouts

— 112

EP 1 883 077 A1

Obtaining data of fuel types in the default
placement layout
—131

Obtaining a fuel type and another fuel type to
be matched into a displacement combination
—132

Obtaining a first, a second
and a third CPR matrixes
—133

Transposing the second CPR matrix and obtaining
CPR matrix of the displacement combination
—134

FIG.1B

Obtaining an MCPR for each
displacement combination — 141

Obtaining an MCPR for the
default placement layout — 142

Subtracting the MCPR for each
displacement combination from the MCPR
for the default placement layout to obtain a
DCPR for the displacement combination — 143

Obtaining a MaxDCPR from the DCPRs — 144

# FIG.1C

FIG.1D

FIG.1E

FIG.2A

21

FIG.2B

221

1

2

EP 1 883 077 A1

EP 1 883 077 A1

FIG.2C

231

2

FIG.2D

232

FIG.2E

1

233

FIG.2F

EP 1 883 077 A1

**FIG.2G**

234

1

FIG.2H

FIG.21

FIG.2J

**European Patent Office**

**EUROPEAN SEARCH REPORT**

Application Number

EP 06 11 7704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 790 618 A (FAWKS JR JAMES E [US]) 4 August 1998 (1998-08-04) * columns 1,2 * * column 5, line 8 - column 7, line 25 * ----- | 1,2,6-13 | INV. G21C5/00 G21C17/00 |
| A | US 2004/196946 A1 (CHAO YUNG-AN [US] ET AL) 7 October 2004 (2004-10-07) * paragraphs [0002] - [0007], [0011] - [0015]; claim 1 * ----- | 1,6-13 | |
| A | US 2006/149515 A1 (HORTON CHARLES E [US] ET AL) 6 July 2006 (2006-07-06) * paragraphs [0001] - [0003] * * paragraphs [0047], [0051]; figure 6 * ----- | 1,6-13 | |

TECHNICAL FIELDS SEARCHED (IPC)

G21C

The present search report has been drawn up for all claims

| Place of search | Date of completion of the search | Examiner |
|---|---|---|
| Munich | 15 November 2006 | Jandl, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 7704

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2006

| Patent document cited in search report | | Publication date | Patent family member(s) | | Publication date |
|---|---|---|---|---|---|
| US 5790618 | A | 04-08-1998 | NONE | | |
| US 2004196946 | A1 | 07-10-2004 | CN | 1527328 A | 08-09-2004 |
| | | | ES | 2249119 A1 | 16-03-2006 |
| | | | FR | 2853987 A1 | 22-10-2004 |
| | | | JP | 2004258037 A | 16-09-2004 |
| US 2006149515 | A1 | 06-07-2006 | EP | 1699058 A2 | 06-09-2006 |
| | | | JP | 2006189442 A | 20-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5790618 A